# EUROPÄISCHE PATENTSCHRIFT

(11) **EP 0 507 945 B1**
(45) Veröffentlichungstag und Bekanntmachung des Hinweises auf die Patenterteilung: **18.03.1998**
(21) Anmeldenummer: 90917520.0
(22) Anmeldetag: 22.10.1990
(51) Int. Cl.: C04B 33/22, F27B 1/20, F27B 1/21, B28B 15/00

(54) **VERFAHREN UND BRENNVORRICHTUNG ZUR HERSTELLUNG VON KERAMISCHEN ERZEUGNISSEN FÜR DEN BAU**
METHOD FOR PRODUCTION OF CONSTRUCTION ARTICLES AND DEVICE FOR BURNING
METHODE DE FABRICATION D'ELEMENTS DE CONSTRUCTION ET DISPOSITIF DE CUISSON

(30) Priorität: 30.10.1989 SU 4750973; 18.10.1990 SU 4872318
(43) Veröffentlichungstag der Anmeldung: 14.10.1992
(73) Patentinhaber: DOLGOPOLOV, Vladimir Nikolaevich, Kiev, 252005 (SU)
(72) Erfinder: DOLGOPOLOV, Vladimir Nikolaevich, Kiev, 252005 (SU)
(74) Vertreter: Beetz & Partner Patentanwälte
(86) Internationale Anmeldenummer: SU9000238
(87) Internationale Veröffentlichungsnummer: WO9106514

(56) Entgegenhaltungen:
- DE-A- 3 204 380
- DE-A- 3 501 627
- DE-A- 3 539 495
- DE-A- 3 637 793
- GB-B- 1 456 367
- SU-A- 36 678
- SU-A- 107 385
- SU-A- 233 511
- SU-A- 271 730
- SU-A- 353 402
- SU-A- 391 372
- SU-A- 580 120
- SU-A- 909 494
- SU-A- 1 057 468
- S.P. ONATSKY "Proizvodstvokeramzita", 1971, izd-vo literatury po stroitelstvu, (Moscow), page 88, paragr. 2; page 109, fig. 30; page 179, paragraph 1 and 2 below, 208-209, the last and the first paragraphs; pages 217-219, the last and the first paragraphs.
- V.V. PEREGUDOV "Tipovye protsessy i ustanovki v tekhnologii stroitelnykh izdely i detalei", 1983, Stroiizdat (Moscow) page 263, paragraph 1 page 271, paragraphs 5,6 page 272, fig. 9.2 page 276, lines 5-6 above page 286, paragraph 2 page 287, fig. 9.16 page 356, fig. 11.16.
- Ju.M. BUTT et al. "Obschaya tekhnologia Silikatov", 1974, Stroiizdat (Moscow) page 94, page 140, paragraph 3, page 229, last paragraph.
- Ju.M. BAZHENOV, "Tekhnologia betona", 1978, Vysshaya shkola (Moscow) page 56, fig. 1.13.

## Beschreibung

### Technisches Gebiet

Die vorliegende Erfindung betrifft die Produktion von Baumaterialien und kann zur Herstellung von Mauer- und anderen Bauerzeugnissen,z.B. von Ziegeln, Wandblöcken, vorwiegend aus tonigen Rohstoffen sowie zur Aufbereitung von Beschickungsmassen für Baumörtel und andere Zwecke verwendet werden.

### Zugrundeliegender Stand der Technik

Hinsichtlich der Betriebskennwerte und der architektonisch-ästhetischen Eigenschaften kommen als wertvollste Bauerzeugnisse keramische Ziegel oder Steine aus tonigen Rohstoffen in Betracht, welche durch vorherige Aufbereitung der Rohstoffe, Formen von Ziegelrohlingen, Trocknen derselben bei 100 bis 150° C während 2 bis 3 Tage hergestellt werden. Um Verblendziegel herstellen zu können, sind entweder monomineralische Tonarten oder Lehmböden erforderlich oder müssen die tonigen Rohstoffe gleichmäßig gemacht und gemischt werden, was einen hohen Elektroenergieaufwand bei großer Ausrüstungsmasse erfordert. Bei diesem Herstellungsverfahren sind Kalkeinschlüsse oder Dolomiteinschlüsse mit einer Größe von 1 bis 2 mm und einem Gehalt von über 1 bis 3% unzulässig, weil sie eine Zerstörung der gebrannten Ziegel bei deren Befeuchtung hervorrufen. Eine lange Brenndauer wird benötigt, um die Ziegellagerung einige Stunden lang unter den Bedingungen zu gewährleisten, bei denen die Ziegeloberfläche so erhitzt ist, daß ihre Temperatur nicht höher liegt als die obere Grenze des Sinterbereiches, und die von der Oberfläche am weitesten entfernten Ziegelpunkte derart erhitzt sind, daß ihre Temperatur die untere Grenze des Sinterbereiches nicht unterschreitet;lange Zeiten für Temperaturanstieg und -senkung beim Brennen sind zum Vermeiden von Defekten notwendig. Die genannten Besonderheiten bedingen einen längeren technologischen Zyklus von mindestens 10 bis 15 Tagen, einen großen Aufwand an Wärmeenergie beim Trocknen und Brennen, eine hohe Materialintensität und hohe Ausrüstungskosten und damit einen hohen Ziegelpreis.

Eine kürzere Dauer der technologischen Vorgänge ist für Technologien typisch, die einen Mechanismus hydraulischer Erhärtung statt pyrosilikatischer Erhärtung ausnutzen. Zu den hauptsächlichen von diesen Technologien zählen folgende.

Die Technologie für Silikatziegel, -steine, Silikatbetonblöcke besteht darin, daß man einen ungebrannten Rohling des Erzeugnisses aus einem befeuchten Gemisch von Quarzs and und Kalk formt, wobei diesem Gemisch in der Regel keine anderen Bindemittel zugesetzt werden; der so erhaltene Formling wird in einem Autoklav bei einem Sättigungsdampfdruck von 0,8 bis 1,6 MPa und entsprechenden Temperaturen von 175 bis 200° C während 7 ... 12 Stunden behandelt. Dieser Technologie sind eigen:
- Notwendigkeit der vorherigen Herstellung von Kalk in Kalkbrennöfen,
- notwendige Anwendung von Sand, der keine schädlichen Einschlüsse, z.B. keine tonigen, enthalten darf,
- es muß in den meisten Fällen Quarzsand oder ein Teil davon gem ahlen werden;
- die Produktion ist einer Verstaubung ausgesetzt,
- obligatorische Anwendung eines Autoklaves und eines hochwertigen Dampfes. Solche kalk-und kieselhaltige Erzeugnisse besitzen geringe ästhetische Eigenschaften, welche beim Betrieb verschlechtert werden, weshalb die Gebäude aus Silikatziegel zu verkleiden oder einer Färbung zu unterwerfen sind. Beim Silikatziegel wie auch beim Keramikziegel wird mit zunehmender Frostbeständigkeit die Haftung mit dem Baumörtel vermindert und umgekehrt, denn diese Parameter hängen von der offenen Porigkeit auf der Oberfläche des Erzeugnisses ab.

Man stellt Bauerzeugnisse auch auf der Basis von Zementbindemitteln,z.B. von Portlandzement, her. Die Erzeugnisse auf der Basis von Zement können sowohl unter autoklaven Bedingungen als auch bei Normaltemperatur erhärten. Die Herstellung von Zement ist jedoch mit einem hohen Brennstoffverbrauch für das Brennen der Rohstoffmischung bei Temperaturen von etwa 1500° C, mit einem hohen Elektroenergieaufwand für das Feinmahlen von karbonathaltigen tonigen Rohstoffen und besonders von sehr festem Klinker-Brennprodukt- sowie mit einer hohen Verstaubung bei der Herstellung und Anwendung von Zement und außerdem noch mit einer hohen Materialintensität der Ausrüstung, in erster Linie ausgekleideter Öfen verbunden. Die Erzeugnisse auf der Zementbasis besitzen ebenfalls unzureichend gute ästhetische Eigenschaften ohne zusätzliche Verputzung.

Außer den obengenannten Technologien sind auch andere Verfahren bekannt, die die Verwendung von Zusammensetzungen oder Komponenten vorsehen, welche tonige Rohstoffe oder Produkte ihrer Verarbeitung enthalten, wobei es bekannt ist, daß :
- /1/ Töne und sandige Lehme in Gegenwart von Kalk hydraulisch aktiv nur unter den autoklaven Bedingungen, inaktiv aber bei Normaltemperatur sind;
- /1/ feinzermahlener Koks, Kesselaschen, gebrannte Töne( Produkte, gebrannt bei einer Temperatur von unter 800° C) in Gegenwart von Kalk aktiv sind sowohl bei der autoklaven Behandlung als auch bei Normaltemperatur;
- /2/ die höchste Aktivität denjenigen Tongesteinen eigen ist, die bei 500 bis 600° C gebrannt sind, während die bei 800 bis 1000° C gebrannten Tongesteine eine stark verringerte Aktivität besitzen; außerdem sind noch bekannt:
- Bindemittel, die aus Kalk und gebranntem Ton /2,3/ bestehen;
- Kalk-Schlacken-Bindemittel /1/, in denen eine erhebliche Menge an glasartigen Alumosilikaten enthalten ist;
- Kalk-Belit-Bindemittel /3/, die durch Brennen von natürlichen oder künstlichen Kalk-Kieselerde- oder Kalk-Ton-Gemischen bei 1000 bis 1200° C gewonnen werden;
- Portlandzemente /1,3/ mit, mineralischen Zusätzen, als welche Koks, Aschen benutzt werden.

Sämtliche genannten Bindemittel bedürfen einer Feinmahlung und haben daher einen hohen Wasserbedarf sowie ändern ihr Volumen beim Erstarren ab. Die Senkung des Wasserbedarfes und die Verminderung der Volumenänderungen durch Einführung von üblichen Füllstoffen ( wie es beim Zementbeton der Fall ist) ist unzulässig beim Erstarren unter von den autoklaven verschiedenen Bedingungen, weil die zementfreien Bindemittel mit den üblich anwendbaren Füllstoffen der einen oder der anderen Korngröße nicht zusammenwirken, und außerdem sind diese Maßnahmen nicht effektiv.

Bekannt ist ein Verfahren zur Herstellung von Schamotte-Kalk-Erzeugnissen (4), welches das Brennen von Ton und Kalkstein bei 950 bis 1000 C, das Befeuchten der gebrannten Produkte und deren Feinmahlen, das Formen des Erzeugnisses und dessen Autoklavbehandlung bei 0,8 bis 1,6 MPa vorsieht. Als eine der Varianten dieses Verfahrens ist die Einführung von ungebranntem Ton in einer Menge von 10 bis 30 % in das Formgemisch vorgesehen, was vermutlich die Dichte des ungebrannten Rohlings und des fertigen Erzeugnisses vergrößert, die offene Porigkeit verringert und die Frostbeständigkeit erhöht. Bei der dritten Variante des Verfahrens wird der ungebrannte Ton oder ein Teil davon als Schlicker beigemischt.

Es ist eine Fertigungsstraße (5) bekannt, die dieses Verfahren realisiert, wobei dem im Drehofen zu brennenden Gemisch von Ton und Kalkstein verbrennende Zusätze beigefügt werden.

Nach diesem Verfahren (4, 5) werden Erzeugnisse hergestellt, die dem Silikatziegel analog sind, wobei anstelle von Quarzsand gemahlener keramischer Sand verwendet wird und als Bindemittel ein Gemisch von Kalk, Rohton und dispersem Keramikruß dient. Das Produkt dieses Verfahrens stellt ein Erzeugnis erhöhter Frostbeständigkeit dar, das gute ästhetische Eigenschaften besitzt, die mit den Eigenschaften des Keramikverblendziegels vergleichbar sind, weil die Rohstoffe mehrmals homogenisiert und bei der Behandlung während des technologischen Prozesses vermischt werden. Dieses Verfahren ermöglicht die Verwendung von nichtstandardisierten tonigen Rohstoffen mit einem hohen Gehalt an groben Carbonateinschlüssen (bis 20 % und darüber), welche in der herkömmlichen Keramikproduktion nicht eingesetzt werden dürfen, und gestattet es, den Energieaufwand und die Materialintensität durch Verkürzung des technologischen Zyklus auf 20 bis 30 Stunden zu senken. Außerdem tritt bei der Verwendung des Verfahrens keine Kalkstaubbildung auf.

Daneben sind dem eben betrachteten Verfahren (4, 5), das der anzumeldenden Erfindung am nächsten kommt, prinzipielle Besonderheiten eigen, und zwar:
- obligatorische Anwendung eines ausgekleideten Drehofens mit starkem Staubentzug, erheblichem Brennstoffaufwand, beträchtlichen Auswürfen von im Roh- und Brennstoff vorhandenen Schwefelverbindungen in die Atmosphäre,
- obligatorischer Einsatz eines Autoklavs bei üblichen Drücken von etwa 0,8 MPa,
- damit verbundene hohe Kennziffern in Hinsicht auf Materialintensität der Ausrüstung und auf Energieaufwand.

Also ist für sämtliche Technologien zur Herstellung von Bauerzeugnissen und -mörteln eine prinzipielle Besonderheit typisch, und zwar obligatorische Anwendung von Öfen, die für Temperaturen von mindestens 1000° C ausgekleidet sind, während für einige Technologien zur Herstellung von Bauerzeugnissen hydraulischer Erhärtung der obligatorische Einsatz von Autoklaven und eines Dampfes mit hohen Parametern sowie eine mit den genannten und anderen Besonderheiten verbundene hohe Materialintensität der Ausrüstung und ein großer Energieverbrauch typisch sind.

Die anzumeldenden Erfindungen haben den Zweck, folgende Aufgaben zu lösen,und zwar:
- die Materialintensität der Ausrüstung und den Energieverbrauch durch Aufbereiten von Beschickungsmassen und Herstellung von Erzeugnissen, für deren Erhärtung die Anwendung von Autoklaven und kann auch ein Gemisch verwendet werden, welches zwei von den genannten Alumosilikatkomponenten enthält.

Der Gehalt jeder der Komponenten im Gemisch kann unterschiedlich sein:
- beim Vorhandensein einer undispersen keramischen Komponente ( eines Zuschlagstoffes) im Gemisch hängt der Gehalt der übrigen Komponenten vom Volumen der Hohlräume zwischen den Körnen des Zuschlagstoffes ab und kann von 10 bis 40% betragen;
- wenn im Gemisch kein keramischer oder kein anderer Zuschlagstoff vorhanden sind( was auch für die dispersen Phasen mit Füllstoff, welche im vorhergehenden Fall behandelt wurden, gilt), kann die Menge eines alkalischen Zusatzes zwischen 10 und 60 % je nach den gesuchten Eigenschaften des Fertigerzeugnisses und dem Dispersionsgrad jeder der Komponenten liegen; bei optimalem Körnungsmodul des Zuschlagstoffes kann sie minimal ca.2% betragen
- beim Vorhandensein sowohl der amorphen wie auch der wasserentziehenden Komponente im Gemisch kann die Menge jeder von diesen Komponenten recht unterschiedlich sein.

Wenn jede der Phasen unterschiedlicher Behandlungstemperatur ein Produkt darstellt, das durch die Wärmebehandlung ein und desselben tonigen Minerals anfällt, ergibt sich daraus ein zusätzlicher Effekt, weil bei der Bildung von Kalziumhydroaluminiumsilikaten und anderen Neubildungen keine Verzerrungen der Silizium-Sauerstoff-Motive und anderer Elemente des Gefüges auftreten oder sie geringfügig sind, wodurch die Höhe der thermodynamischen Barriere zusätzlich vermindert wird, die die Entwicklung der chemischen Reaktion zwischen den Komponenten behindert.

Die dargelegte Vergehnsweise gestattet bei dem gleichen oder einem <wie es unten veranschaulicht werden soll) kleineren Aufwand für die Wärmebehandlung der Rohstoffe es, ein Formgemisch aufzubereiten, aus dem zum Unterschied von dem erwähnten Verfahren /4,5/ Erzeugnisse hergestellt werden können, die bei feuchten Bedingungen oder in einem Wasserdämpfe enthaltenden Medium oder bei Normaltemperatur oder bei der Dampfbehandlung unter Normaldruck oder bei autoklaver Behandlung unter erheblicher Verkürzung ihrer Dauer erhärten, wodurch gerade die Materialintensität der Ausrüstung und der Energieverbrauch herabgesetzt wird.

Verfügt der tonige Rohstoff über ein Karbonat, z.B. Kalkstein, oder wird diesem Rohstoff es zugesetst, dann soll das Brennprodukt hochaktive Neubildungen enthalten, die für Zemente kennzeichnend sind, wobei eine Zementbeimischung jedoch nicht notwendig ist.

Das Formgemisch kann auch eine gewisse Menge an ungebrannter toniger Phase (bis zu 5...15%) enthalten, die dank ihre Plastizität und Dispersität die Formbarkeit des Gemisches begünstigt, die Dichte und andere Kennwerte des Erzeugnisses erhöht, wobei jedoch das Vorhandensein und die Vergrößerung des Gehaltes der ungebrannten tonigen Phase eine Erhöhung der Naßbehandlungstemperatur erfordert.

Die neue Zusammensetzung des Formgemisches nach der anzumeldenden Erfindung besitzt außer den aufgezählten positiven Eigenschaften noch andere positive Eigenschaften:
- die aus den genannten Zusammensetzungen hergestellten Erzeugnisse weisen, eine erhöhte Haftung mit dem Baumörtel durch chemische Reaktionen der wasserentziehenden und/oder amorphen Phase, die sich auf der Oberfläche des Erzeugnisses befinden, mit dem Portlandzement des Baumörtels auf, wobei bei dessen Hydratation insbesondere Kalziumoxydhydrat frei wird;
- die dispersen Phasen, in erster Linie das Dehydrat, weisen im Vergleich zur keramischen Phase und vielmehr zu feuchtem Ton eine bedeutend gesättigere Farbe durch Färbung mit Eisenoxiden auf, was die architektonischästhetischen Eigenschaften der Erzeugnisse verbessert;
- die Erzeugnisse oder Baumörtel, welche aus einem Gemisch von Phasen unterschiedlicher Behandlungstemperatur bestehen oder dieses enthalten, weisen eine erhöhte Frostbeständigkeit dadurch auf, daß die bei der Formung auftretende Feuchtigkeit verminderbar ist und daß die offene Porosität der Erzeugnisse durch Übergang von der autoklaven Behandlung bei hohen Drücken zu einer Warmfeuchtbehandlung bei Normaldruck oder einem nicht großen Überdruck verkleinert werden kann, weil es bekannt ist, daß die autoklaven Erzeugnisse lange und offene Poren und Kapillaren haben, die am Ende der autoklaven Behandlung bei Drucksenkung dadurch gebildet werden, daß die Feuchte aus dem Inneren des Erzeugnisses heraus zu dessen Oberfläche hin intensiv wandert.

Die angegebenen Eigenschaften sind auch dem Zementbeton, wenn das anzumeldende Gemisch in diesen als Zusatzstoff eingeführt wird; die Beständigkeit eines solchen Betons ist in einigen agressiven Medien höher als beim Zusetzen von Puzzolan oder Schlacke.

Das Gemisch aus Phasen unterschiedlicher Behandlungstemperatur Kann durch Mischen von bei entsprechenden Temperaturen getrennt erhaltenen Komponenten aufbereitet werden. Eine zusätzliche Herabsetzung des Energieverbrauchs kann durch die Ausnutzung einer bei der Gewinnung der Phase von höherer Temperatur freigesetzten Wärme zur Wärmebehandlung erzielt werden, um eine andere oder andere Temperaturphasen, beispielsweise einen Drehofen verlassende Gase zur Dehydratisierung des betreffenden Teils des tonigen Rohstoffes z.B. in einem Hochtemperaturtrockner zu gewinnen.

Kalk oder ein anderer, alkalihaltiger oder ein Alkali ausscheidender Bestandteil können ins Formgemisch nach dem Brennen des tonigen Bestandteils eingeführt werden. Es ist besser, die Maßnahme nach dem bekannten Verfahren /4,5/ zu verwenden, bei der dem Brennen ein natürliches oder künstliches Gemisch von Ton und Kalkstein unterworfen wird.

Die getrennte Erzeugung unterschiedlicher Temperaturphasen ist weniger technologiegerecht, weil dazu mehrere Heizaggregate angewendet werden müssen. Eine weitere Verminderung der Ausrüstungsmasse und eine ratiomale Wärmenutzung kann durch das Brennen des gesamten tonigen oder Ton-Karbonat-Rohstoffes in einem Heizaggregat erzielt werden, wobei in der Rohmischung ein nichtstationäres Temperaturfeld aufgebaut wird, das einen bestimmten Temperaturgradienten aufweist. Eine solche Vergehensweise kann beispielsweise durch Zufuhr einer Rohmasse in einen Kanalofen oder einen Schachtofen realisiert werden, wobei auf dem Umfang seines Mittelteils Gas- oder andere Brenner angeordnet sind. Dabei ist der Temperaturgradient zur Peripherie der Rohmasse hin und der Wärmefluß ins Innere der Rohmasse hin gerichtet. Durch ein solches Brennen stellt sein Produkt ein Gemisch von Phasen unterschiedlicher Temperaturen dar.

Die Lösung der anderen der Hauptaufgaben der Erfindung,d.h. der Wegfall der Anwendung von ausgekleideten Öfen, wird dadurch erreicht, daß in der Rohmasse ein nichtstationäres Temperaturfeld mit einem Temperaturgradienten aufgebaut wird, der ins Innere der Rohmasse hin gerichtet ist; wobei der Wärmestrom aus dem Inneren der Rohmasse heraus zu deren Peripherie hin gerichtet ist. Diese Maßnahme läßt sich durch Erhitzung des inneren Teils der zu brennenden Rohmasse auf eine maximale Temperatur, z.B. bis 900...1100° C durchführen, wobei der äußere Teil der Rohmasse dadurch entweder zu dehydratisiertem oder undehydratisiertem getrocknetem Ton wird , was die Möglichkeit bietet, auf die hitzebeständige Ausfütterung(Auskleidung) zu verzichten, wobei sie durch einen dünnen, z.B. aus einem Metallblech bestehenden Mantel ersetzt wird, während bei einigen Ausführungsvarianten der vorliegenden Erfindung auch auf den Mantel selbst verzichtet werden kann. Wie es im weiteren veranschaulicht werden soll, ist es besser,diese Maßnahme durch Erhitzung des inneren Teils der Rohmasse, die in einen Schacht ( der dem Schachtofen ähnlich ist) eingebracht ist,zu realisieren. In den Mittelteil des Schachtes kann ein Wärmeträger,z .B. ein Gas eingeführt werden. Bei Verwendung eines festen Brennstoffes oder eines Rohstoffes, der einen Bestandteil enthält, welcher einen festen Brennstoff, z.B. Kohlengewinnungsberge oder Abfälle der Energetik, darstellt, ist es günstiger, den brennstoffhaltigen Rohstoff in dem - im Querschnitt gesehenmittleren Teil des Schachtes und in dem in der Nähe der Schachtwand befindlichen Teil des Schachtes einen Rohstoff unterzubringen, der keinen Bestandteil mit festem Brennstoff enthält.

Die Unterbringung eines tonigen Bestandteils in dem schachtwandnahen Bereich trägt zu einer Verminderung des Verschleisses des Schachtes bei dessen Betrieb bei, da der ungebrannte oder der dehydratisierte Ton eine geringe Härte hat, was beim Einsatz eines gewöhnlichen Schachtofens zur Realisierung des angemeldeten Verfahrens von Bedeutung ist.

Ist in der Rohmischung ein Bestandteil, der einen festen Brennstoff darstellt, vorhanden, so wird durch Einführung von Luft in einen Bereich der Mischung, in der die höchste Temperatur herrscht, oder in die Brennzone, die sich der Vorwärmzone anschließt, ein zusätzlicher Schutz des Schachtes vor Wärmeeinwirkungen gesichert sowie Kohlenstoffmonoxid nachverbrannt und werden dessen Auswürfe in die Atmosphäre verringert.

Beim bekannten Verfahren /5/ erfolgt das Brennen im Gegenstrom, was seine technologischen Vorteile hat.Jedoch wird infolge des Vorhandenseins von Schwefel im Brennstoff und/oder in verbrennenden Zusatzstoffen Schwefeldioxid in die Atmosphäre ausgeworfen, wobei die Ausscheidung desselben aus dem als fester Brennstoff dienenden Bestandteil in der Regel bereits in der Vorwärmzone beginnt und dieses Schwefeldioxid aus dem Ofen zusammen mit anderen Gasen abgeleitet wird. Durch das Brennen von brennstoffhaltigen Ton-Karbonat-Körnchen werden , wie es nach diesem Verfahren vorgesehen ist, Auswürfe von Schwefeldioxid vermindert, aber in geringem Maße. Wird aber das Brennen im Gleichstrom in einem Dreh-oder Schachtofen durchgeführt oder/und werden die Brennprodukte vor der Formung des Erzeugnisses in aus dem Ofen abgehenden Abgasen untergebracht, so führt die Umsetzung des in den Abgasen enthaltenen Schwefeldioxids mit einem gegenüber diesem aktiven Kalk zur Bildung von Kalzium-oder/und Magnesiumsulfaten, d.h. zur Bildung von Gips, dessen Vorhandensein im Formgemisch die Festigkeit, Frostbeständigkeit und Luftbeständigkeit des Erzeugnisses erhöht, die Erhärtungsdauer verkürzt oder die Parameter der Warmfeuchtbehandlung verkleinert.

Die Formung von Rohlingen kann nach beliebigen bekannten Verfahren, z.B. durch Pressen, Stampfen, Rütteln, Kordeln oder andere Methoden erfolgen. Die Erzeugnisqualität wird bei der Formung unter den Vibrationsbedingungen verbessert, weil die keramische Phase der Brennprodukte eine große Anzahl von offenen Poren aufweist und die Feuchtigkeit beim Vibrieren (Rütteln) des feuchten Formgemisches die offenen Poren verläßt, wobei ein intensives Vermischen der Bestandteile stattfindet und nach dem Aufhören der Vibrationseinwirkung die Poren wieder mit dem dispersen feuchten Gemisch aufgefüllt werden.

Bei den bekannten Verfahren /4,5/ werden die Brennprodukte einer Feinzerkleinerung (Feinmahlung) unterworfen. Ein solches Gemisch hat eine erhöhte Endporosität wegen einer erhöhten Formungsfeuchtigkeit sowie andere negative Besonderheiten. Es ist besser, wenn die keramischen Phasen einen Zuschlagstoff mit einem optimalen Körnungsmodul darstellen und die übrigen Phasen auf eine Fraktion zermahlen sind, die geringer als 0,1...0,2 mm ist, d.h. es ist wünschenswert, daß die Brennprodukte teilweise zermahlen werden. Dies kann dadurch erreicht werden, daß sämtliche Bestandteile zusammen zermahlen werden, wobei eine ausreichende Dispersität unkeramischer Phasen durch abrasive Wirkung des härteren keramischen Bestandteils erzielt wird. Die meisten bekannten Vorrichtungen stellen eine hinsichtlich der Festigkeit und Härte selektive Zerkleinerung sicher, wobei es bekannt ist, daß sich durch die höchste Selektivität Rotorbrecher auszeichnen. Es ist güstiger, verschiedene Phasen getrennt zu zerkleinern, z.B. das keramische Brennprodukt bis auf eine Korngröße von geringer als 5... 10 mm und die wasserentziehende und die amorphe Phase durch Mahlen auf eine Fraktion, die geringer als 0,1... 0,2 mm ist.

Beim Brennen des Rohstoffes in einer Einrichtung vom Schachttyp können die Rohmischung oder die das Rohmaterial bildenden Bestandteile in den Schacht ohne Vorbehandlung eingebracht werden. Wird das Rohmaterial vor dem Einbringen desselben in den Schacht vorgranuliert, so soll die Rohmaterialschicht dank gleicher Korndimension der Rohstoffteilchen einen sprunghaft verminderten aerodynamischen Widerstand aufweisen, was es gestattet, die Hermetisierungsvorrichtungen für Gaseinblas- und Gasabsaugsysteme zu vereinfachen; außerdem werden im Inneren der Körnchen günstigere Bedingungen für den Verlauf der Reaktionen zwischen den Bestandteilen geschaffen.

Die anzumeldende Beschickungsmasse kann -wie oben erwähnt - sowohl unter den autoklaven als auch unter nichtautoklaven Bedingungen erhärten. Bei der autoklaven Behandlung wird die Festigkeit der Erzeugnisse erhöht. Eine zusätzliche Verminderung der Ausrüstungsmasse kann durch eine zweistufige Behandlung des Erzeugnisses erreicht werden,d.h. zuerst unter Normaldruck bei einer Wasserdampftemperatur von 30 bis 100° C während 4 bis 10 Stunden und dann im Autoklav bei einer Temperatur von z.B. 115 bis 200° C während 3 bis 6 Stunden. Diese Maßnahme ermöglicht die Herstellung von Erzeugnissen mit erhöhter Festigkeit bei einer hohen Leistung der Autoklave.

### Kurzbeschreibung der Zeichnungen

In Fig.1 ist schematisch die Gesamtansicht der -nach der Meinung des Anmelders - besten Ausführungsform einer Fertigungsstraße zur Herstellung von anzumeldenden Bauerzeugnissen gezeigt.
In Fig.2 ist eine Ausführungsvariante einer Einrichtung vom Schachttyp ohne feuerfeste Auskleidung dargestellt, welche für die Herstellung der anzumeldenden Beschickungsmasse bestimmt ist und zur in Fig.1 gezeigten Fertigungsstraße gehört.
In Fig.3 ist ein Beispiel für das Brennen der Rohmischung dargestellt, bei dem sie aus dem Inneren nach außen gebrannt wird.

### Ausführungsbeispiele der Erfindung

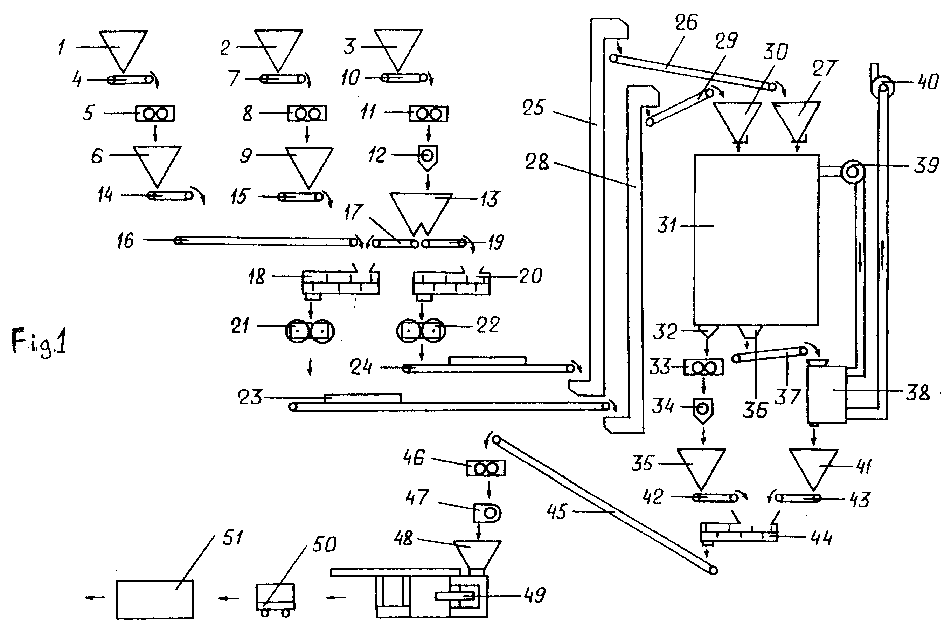

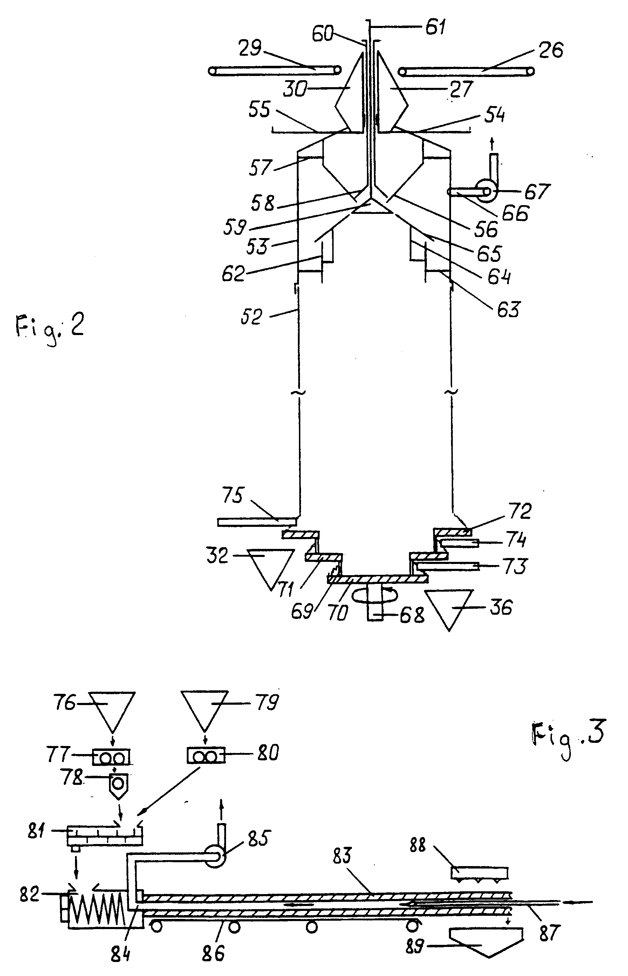

Die - nach der Meinung des Anmelders - beste Ausführungsvariante des Verfahrens zur Herstellung von Bauerzeugnissen wird auf einer Fertigungsstraße nach Fig.1 realisiert. Rohstoff- und Brennstoffkomponenten werden an die Produktion in üblicher Weise gefördert und in Kohlen-, Kalkstein- und Tonsilos 1,2 bzw.3 aufgegeben. Kohle oder eine andere Festbrennstoffkomponente wird durch einen Zubringer 4 einem Walzenbrecher 5 zugeführt, der die Kohle auf eine Korngröße von unter 2... 3 mm zerkleinert und von dem aus die zerkleinerte Kohle einem Silo 6 zugeleitet wird. Durch einen Zubringer 7 wird Kalkstein einem Walzenbrecher 8 zugeführt, der die Zerkleinerung des Kalksteins auf eine Korngröße von kleiner als 5...10 mm übernimmt und von dem aus der so zerkleinerte Kalkstein in einen Silo 9 gelangt. Ton (oder Lehm) wird an Grobmahlungswalzen 11 mit Hilfe eines Zubringers 10 zugeführt und sodann an einen Desintegrator 12 zu seiner Zerkleinerung geleitet, wonach der Ton zu einem Silo 13 gelangt. Kohle und Kalkstein werden durch Zubringer 14,15 und einen Förderer 16 sowie Ton durch einen Zubringer 17 einem Mischer 18 zugeführt, der mit einem Anfeuchter ausgestattet ist und in dem die Bestandteile vermischt und bis zu 15...20% befeuchtet werden. Der Ton wird durch einen Zubringer 19 in einen Mischer 20 gebracht, der mit einem Anfeuchter versehen ist und in dem der Ton homogenisiert und bis zu 15... 20% befeuchtet wird. Von den Mischern 18 und 20 aus gelangt die Masse jeweils an einen zugehörigen Granulierapparat 21 und 22 einer beliebigen bekannten Bauart. Die so erhaltenen Körnchen mit einer Größe von 10 bis 30 mm (es ist von Vorteil, daß die Tonkörnchen eine geringere Korngröße haben) gelangen in Fließbandtrockner 23,24, wo ihre Feuchtigkeit auf 4 bis 12% gesenkt wird. Die Tonkörnchen werden von einem Elevator 25 und einem Förderer 26 in einen Beschickungsbunker 27 befördert. Die Körnchen der (aus Ton,Kalkstein und Kohle bestehenden) Mischung werden vom Elevator 28 und durch einen Förderer 29 einem Aufgabebunker 30 zugeleitet. Die Zubringer 14,15,17,19 und der Förderer 16 arbeiten in einer solchen Betriebsart, daß in den Körnchen der Mischung der Kohlengehalt 2,5 bis 4,5 Gew.% je nach Heizwert der Kohle und Kalksteingehalt in der Mischung beträgt sowie der Kalksteingehalt 5 bis 20% je nach anderen technologischen Parametern ausmacht und sich die Masse der Körnchen der Mischung zur Masse der Tonkörnchen bevorzugt wie 90:10 bis 65 :35 verhält. Die Bunker 27,30 sind Aufgabebunker einer Brenneinrichtung 31, die in Fig.2 ausführlich gezeigt ist. In der Einrichtung 31 werden die Körnchen der Mischung durch darin vorhandene Kohle bei einer Temperatur gebrannt, die bevorzugt zwischen 900 und 1100° C liegt, während die Tonkörnchen einem Erwärmen unterhalb dieser maximalen Temperatur durch eine beim Brennen der Körnchen der Mischung frei werdende Wärme unterworfen werden. Nach erfolgtem Brennen werden die Tonkörnchen, die aus einem Bunker 32 zu einem Walzenbrecher 33 gelangen, im letzteren zerstört und in einem Desintegrator 34 auf eine Korngröße von unter 0,1...0,2 mm zerkleinert und einem Bunker 35 zugeleitet. Die Körnchen der Mischung werden aus einem Bunker 36 durch einen Förderer 37 an einen Adsorber 38 befördert, in dem sie aus den von der Einrichtung 31 über einen Rauchabsauger 39 abgehenden Abgasen Schwefeldioxid sowie Kohlendioxid adsorbieren, worauf die Gase durch einen Rauchabsauer 40 herausgeworfen werden, während die Körnchen der Mischung in einen Bunker 41 ausgetragen werden. Dann werden die Bestandteile durch Dosierer 42,43 einem Mischer 44, der mit einem Anfeuchter versehen ist, zugeleitet, um ein Formgemisch mit einer Feuchtigkeit von 5 bis 15% je nach Verfahren und Einrichtung zu dessen Formung bereitzustellen. Anschließend wird das Gemisch durch einen Förderer 45 in einen Walzenbrecher 46 transportiert, von dem aus es in einen Rotorbrecher 47 zu seinem Vermischen und alsdann in einen Formgemischbunker 48 einer Presse 49 zum Halbnaßpressen geleitet wird, auf der Ziegel oder Blocksteine bei spezifischem Druck von 15,0 bis 25,0 MPa gepreßt werden. Mit einem Setzautomat der Presse werden die Ziegelrohlinge vom Pressentisch abgenommen und auf einen Wagen 50 aufgelegt, der in eine Warmfeuchtbehandlungskammer 51 eingefahren wird, die entweder eine Bedampfungskammer oder eine Kleindruckkammer oder ein Autoklav sein kann, wo die Erzeugnisse im wesentlichen 3 bis 15 Stunden lang je nach Dampfparametern behandelt werden. Die hergestellten Erzeugnisse besitzen eine Festigkeit von 10,0 bis 15,0 MPa, eine Frostbeständigkeit von mehr als 25 Zyklen, eine Wasserabsorpton von 12 bis 17%. Alle Vorrichtungen, die zu der beschriebenen technologischen Fertigungsstraße gehören, sind allgemein bekannt, werden in der Bauindustrie zur Herstellung von Baumaterialien weitgehend verwendet, während der Adsorber 38 in der chemischen Industrie breite Anwendung findet,wobei bei Verwendung von schwefelarmer Kohle der letztgenannte wegfallen kann, was es auch gestattet, die Kalksteinmenge in der Rohmischung zu vermindern.

Die in Fig.2 dargestellte eine der Ausführungsformen der Brenneinrichtung umfaßt einen Schacht 52, der beispielsweise aus einem dünnen Stahlblech niedriger Stahlsorten gefertigt ist und in dessen Oberteil eine Baugruppe zur getrennten Aufgabe vorhanden ist, welche aus einem Mantel 53 besteht, in dem Aufgabebunker 27, 30 mit Dosierern 54,55, die mit deren Antrieben verbunden sind, ein Zwischenbunker 56 auf Stützen 57, bewegliche Kegel 58,59, die über Zugelemente 60,61 mit Antrieben verbunden sind, eine Trennwand 62 in Form eines Ringes angeordnet sind, die an Stützen 63 befestigt ist und an der mittels Stützen 64 ein unbeweglicher Kegel 65 angebracht ist. Der Mantel 53 ist über einen Rauchzug 66 mit einem Rauchabsauger 67 verbunden. Unter einer Entleerungsöffung des Schachtes 52 befindet sich eine Baugruppe zum getrennten Entladen, welche eine Antriebswelle 68, auf der mittels Stützen 69 Drehscheiben 70,71,72 übereinander befestigt sind, aufweist. Die untere Scheibe 70 ist voll gefertigt, während jede der übrigen Scheiben eine Zentralöffnung haben. Der Durchmesser der Scheiben 71, 72 nimmt stufenweise zur ungeteilten Scheibe 70 hin ab. Entsprechenderweise nimmt der Durchmesser der Zentralöffnung in jeder Scheibe 71 bzw.72 ab. Die Scheiben 70, 72 sind mit Abstreifer 73,74 versehen, unterhalb derer der Bunker 36 angeordnet ist. An der Scheibe 72 ein Abstreifer 75 angebracht, unter dem der Bunker 32 eingebaut ist. Die Einrichtung kann auch eine größere Anzahl von Scheiben enthalten, deren jede mindestens einen Abstreifer aufweist. Unwesentliche Bauelemente der beschriebenen Einrichtung, darunter Befestigungselemente des Schachtes, der Bunker, Abstreifer, der Antriebswelle, die Drehvorrichtung zum Antrieb der Welle, sind nicht gezeigt, weil sie in verschiedener Weise unter Heranziehung von allgemeinbekannten Mitteln ausgeführt werden können.

Die Einrichtung nach Fig.2 funktioniert wie folgt. Die Tonkörnchen werden aus dem Bunker 27 vom Dosierer 54 unter der Wirkung des Antriebs dem Zwischenbunker 56 zugeleitet. Mit dem Zugelement 60 wird durch den An der bewegliche Kegel 58 aufwärtsbewegt, wodurch die Tonkörnchen über die Kegel 59,65 in den Freiraum(Spalt) zwischen dem Schacht 52 und der zylindrischen Trennwand 62 umgeschüttet werden, worauf der Kegel 58 bis auf die bisherige Stellung gesenkt wird. Die Körnchen der Mischung werden aus dem Bunker 30 durch den Dosierer 55 unter der Wirkung eines Zugelementes und des Antriebs (diese beiden sind nicht gezeigt) dem Zwischenbunker 56 zugeführt. Das Zugelement 61 bewegt den beweglichen Kegel 59 nach unten, worauf mit dem Zugelement 60 der bewegliche Kegel 58 aufwärtsbewegt wird, wodurch die Körnchen der Mischung in den inneren Raum der Trennwandung 62 umgeschüttet werden, worauf der Aufgabezyklus wiederholt wird.Im Schacht 52 erfolgt das Brennen der Körnchen der Mischung durch in ihnen vorhandene Kohle analog dem im üblichen Schachtofen verlaufenden Brennvorgang, wobei die Tonkörnchen durch die Wärmeübertragung von den Körnchen der Mischung einer Wärmeeinwirkung unterworfen werden, deren Temperaturen unterhalb der Temperatur der Körnchen der Mischung liegen und zur Wand des Schachtes 52 hin abnehmen. Die Temperatur, mit der dabei auf die Schachtwand eingewirkt wird, hängt von der Brenndauer der Körnchen der Mischung bei maximaler Temperatur und von der Spaltweite zwischen der Trennwand 62 und dem Schacht 52 ab, die je nach der gesuchten Zusammensetzung der Brennprodukte (Phasenverhältnis) und anderen Faktoren verschieden sein kann und vorzugsweise 40 bis 100 mm beträgt. Der Rauchabsauger 67 gewährleistet optimale Betriebsbedingungen für die Strömung von Gasen in der Körnchenschicht, welche nach den allgemeinbekannten Vorschriften gewählt werden. Beim Senken der Körnchen zur Entleerungsöffnung des Schachtes 52 hin werden sie mit einzusaugender Luft abgekühlt. Die Tonkörnchen treffen auf die Scheibe 72 auf, deren Durchmesser der Zentralöffnung in vorteilhafter Weise nahe dem Durchmesser der Trennwand 62 ist. Die Körnchen der Mischung treffen auf die Scheiben 71,70 auf. Beim Drehen der Welle 68 werden die Tonkörnchen durch den Abstreifer 75 in den Bunker 32 abgeworfen, während die Körnchen der Mischung durch die Abstreifer 74,73 in den Bunker 36 abgeworfen werden, von wo aus sie zur weiteren Behandlung in Übereinstimmung mit Fig.1 oder für andere Zwecke geleitet werden.

Die Baugruppen zur getrennten Aufgabe und Entladung können eine beliebige andere Bauart unter der Voraussetzung haben, daß die von diesen Baugruppen auszuübenden, obenbeschriebenen Funktionen nicht verlorengehen. Die Baugruppe zur getrennten Aufgabe kann als schwenkbare Doppelrinne ausgebildet sein, deren eine Entleerungsöffnung sich über dem Zwischenraum (Spalt) zwischen der Trennwand 62 und dem Schacht 52 befindet und deren andere Entleerungsöffnung im inneren Raum der Trennwandung 62 angeordnet ist;in diesem Fall kann man die Trennwandung nicht machen, wenn die Vorrichtung zur Schwenkung der Rinne mit der Entleerungsvorrichtung des des Schachtes synchronisiert ist. Die beschriebene Baugruppe zum getrennten Entladen stellt eine Abwandlung der bekannten Einrichtung /6/ dar, die für andere Zwecke geeignet ist. Es können auch andere Verfahren zum Trennen der Körnchen der Mischung und der Körnchen des Tons ohne Anwendung der Baugruppe zum getrennten Entladen verwendet werden, welche z.B. folgende Verfahrensschritte umfassen: Gewinnung von verschieden großen Körnchen mit Hilfe der Granulierapparate 21,22 , Entladen aller Körnchen aus dem Schacht und sodann Aussiebung der Körnchen nach Fraktionen. Hierbei wird dadurch, daß sich die Tonkörnchen geringerer Korngröße im schachtwandnahen Bereich befinden, der parasitäre Zug in diesem Bereich verringert, weil die Schicht aus den Körnchen der Mischung, die eine größere Kornabmessung haben, im mittleren Teil des Schachtes einen geringeren aerodynamischen Widerstand erzeugt, der der Gasströmung entgegenwirkt. Wie oben erwähnt, können die Körnchen des Tons und der Mischung zusammen zerkleinert werden. Es erübrigt sich das getrennte Entladen (Entleeren) auch bei Verwendung des angemeldeten Verfahrens und einer zugehörigen Einrichtung zur Herstellung von Portlandzementklinker und zur gleichzeitigen Aufbereitung eines aktiven Zusatzstoffes für diesen Klinker.

In der Einrichtung vom Schachttyp können zum Brennen von Rohstoffen auch andere Energieträger, z.B. ein Gas angewendet werden. Die Bauarten von Vorrichtungen zum Verbrennen von Brennstoffen sind allgemein bekannt. Der Schacht kann mit einem oder mehreren Sohlenbrennern ausgestattet sein, die im unteren Teil des Schachtes, hauptsächlich in der Mitte dessen Querschnitts angeordnet sind. Der Schacht kann mit Balkenbrennern versehen sein, die mit Hilfe eines oder mehrerer Balken vorzugsweise in der Mitte des Querschnitts des Schachtes im -in Höhenrichtung gesehen- mittleren Teil desselben angebracht sind. Ein Brenner (oder mehrere Brenner) können auch in der Mitte des Querschnitts des Oberteils des Schachtes angeordnet sein, wobei im Oberteil des Schachtes eine Ladevorrichtung und keine Abzugsvorrichtung angeordnet ist. Also kann eine der Varianten für das Brennen von Rohstoffen im Gleichstrom realisiert werden.

Die Bildung eines ins Innere der Rohmasse gerichteten Temperaturgradienten in der im Schacht verschiebbaren Rohmasse kann auch durch andere Maßnahmen erreicht wer den, z.B. dadurch, daß in der Schachtwand längs deren Umfangslinie gasdurchlässige Öffnungen vorgesehen sein können. Die durch die Öffnungen in den Schacht infolge eines darin durch einen Rauchabsauger erzeugten Unterdrucks gelangende Luft soll einem Wärmefluß entgegenwirken, der zur Schachtwand hin gerichtet ist. Öffnungen, die bevorzugt regelbar sind, können auf Niveaus, bezogen auf die Schachthöhe, vorgesehen sein, welche der Lage der Zone mit maximaler Temperatur der Masse entsprechen.

Eine der Ausführungsvarianten des Verfahrens zum Brennen einer Rohmasse, bei welcher sie aus ihrem Inneren heraus gebrannt wird, ist in Fig.3 gezeigt ist. Ton wird aus dem Bunker 76 in Grobmahlungswalzen 77 und in einen Desintegrator 77 geleitet. Kalkstein wird aus einem Bunker 79 einem Walzenbrecher 80 zu seiner Zerkleinerung zugeführt. Die so erhaltenen Bestandteile werden einem Mischer 81 zugeleitet, der mit einem Anfeuchter ausgestattet ist und in dem die Masse vermischt und auf 15 bis 20% befeuchtet wird, von wo aus die so gebildete Mischung an einen Extruder 82 gefördert wird, mit dem ein rohrförmiges Element 83 mittels eines Hohlraumbildners 84 geformt wird, der in seinem Inneren einen Durchgangskanal aufweist, der mit einer Abzugsvorrichtung 85 verbunden ist, was einen Transport eines Gasmediums innerhalb des rohrförmigen Elementes 83 sicherstellt, das über einen Förderer 86 bewegt wird. In das rohrförmige Element 83 ist um eine gewisse Tiefe ein Gas- oder ein anderer Brenner 87 hineingeführt. Die Erwärmungstemperatur des inneren Teils des rohrförmigen Elementes hängt von der Wanddicke desselben, der Flammentemperatur des Brenners, der Bewegungsgeschwindigkeit des rohrförmigen Elementes auf dem Förderer und von anderen Faktoren ab. Über die Wanddicke des rohrförmigen Elementes werden Phasen des tonigen Stoffes gebildet, welche unterschiedliche Temperaturen aufweisen. An der Innen-und/oder Außenfläche des rohrförmigen Elementes können Längsvorsprünge oder -aussparungen durch entsprechende Konfiguration des Mundstücks und des Hohlraumbildners des Extruders ausgeführt werden, was es gestattet, das Verhältnis zwischen unterschiedlichen Temperaturphasen im Brenngut zusätzlich zu regeln. Durch die Wirkung der Feuchte vom Anfeuchter 88 wird das gebrannte Element mit ablöschenden Kalkteilchen zerstört, so daß Splitter des rohrförmigen Elementes in den Bunker 89 fallen. Es können gleichzeitig mehrere rohrförmige Elemente geformt werden.

Mit dem Extruder kann man auch ein toniges Element rohrförmiger oder ähnlicher Gestalt formen, welches im Querschnitt nichtgeschlossen ist, wobei im Element, ein lüngsverlaufender Hohlraum gebildet wird, in den ein feststehender Erhitzer, z.B. einen elektrischen, hineingeführt sein kann. Mit dem Extruder können auch mehrere, im Querschnitt rechteckige( eine dazu nahe Form aufweisende), zueinander parallele Elemente geformt werden, wobei in den Zwischenräumen zwischen ihnen Erhitzer installiert sind. Die dargelegte Maßnahme realisiert das Prinzip einer äußeren Erwärmung eines Teils der Rohmasse.

Die Durchführung der Erwärmung des inneren Teils oder vorwiegend des inneren Teils der Masse kann auch auf anderen beliebigen Prinzipien,z. B. auf der Verwendung von Hochfrequenzströmen zur inneren dielektrischen Erwärmung der Rohmasse analog dazu beruhen, wie sie beim Brennen von Ton zu Keramsit ausgenutzt werden, aber mit dein Unterschied, daß zur Realisierung des angemeldeten Verfahrens eine Wärmeeinwirkung beispielsweise in zwei zueinander senkrechten Richtungen erzeugt wird, wozu man um die Rohmasse jeweils zwei Paare Platten zweier Hochfrequenzkondensatoren anordnet.

Die grundlegenden Leitsätze, die sich auf Methoden zur Auswahl der Fraktionszusammensetzung für Formgemische betreffen, sind allgemein bekannt und bei der Durchführung der anzumeldenden Erfindungen anwendbar.

## Patentansprüche

1. Verfahren zur Herstellung von keramischen Erzeugnissen für den Bau
aus einem tonigen oder tonartigen Material mit einem alkalischen Bestandteil oder Zusatz eines alkalischen Bestandteils als Bindemittel, beispielsweise Kalk, mit folgenden Schritten:
(1) Brennen des Tonmaterials bei einer Temperatur von etwa 900 °C bis 1100 °C,
(2) ggf. Vermischen des gebrannten Tonmaterials mit dem Bindemittel,
(3) Formen dieses Gemisches zu einem Erzeugnis und
(4) Warmfeuchtbehandlung des Erzeugnisses,
das dadurch **gekennzeichnet** ist, daß das gebrannte Tonmaterial Produkte der Wärmebehandlung des Tones bei der Temperatur seiner Amorphisierung und/oder Dehydratisierung enthält.

2. Verfahren nach Anspruch 1,
dadurch gekennzeichnet, daß
der alkalische Bestandteil Kalk in einem Anteil von 2 % ist.

3. Verfahren nach Anspruch 1 oder 2,
dadurch gekennzeichnet, daß
die Produkte der Wärmebehandlung des Tones während des Brennens des Tonmaterials gebildet werden.

4. Verfahren nach Anspruch 1 oder 2,
dadurch gekennzeichnet, daß
die Produkte der Wärmebehandlung des Tones mit dem gebrannten Tonmaterial vermischt werden.

5. Verfahren nach Anspruch 1 bis 3,
dadurch gekennzeichnet, daß
der Ton mit einer Festbrennstoffkomponente vermischt wird, dieses Gemisch granuliert wird und die erhaltenen Feinkörner in einem schachtartigen Ofen durch die Wärme des Ausbrennens des in diesen vorhandenen Kohlenstoffs der Festbrennstoffkomponente verbrannt werden, wobei die Feinkörner in dem an der Wand anliegenden Bereich des Schachtes einer Wärmebehandlung bei den Temperaturen von ca. 900 bis 800 °C und ca. 600 bis 450 °C unterworfen werden.

6. Vorrichtung zur Herstellung von keramischen Erzeugnissen für den Bau
bestehend aus einer Einheit zum Aufgeben des Rohmaterials, einer Einheit (52) zum Brennen des Rohmaterials und einer Einheit zum Auslaß von Abgasen und Brennprodukten,
**dadurch gekennzeichnet,** daß in der Einheit (52) zum Brennen des Rohmaterials im Rohmaterial ein nichtstationäres Temperaturfeld mit einem positiven Temperaturgradienten aufgebaut wird, der ins Innere des Rohmaterials hin gerichtet ist.

7. Vorrichtung nach Anspruch 6,
dadurch gekennzeichnet, daß
die Wand der Einheit (52) zum Brennen des Rohmaterials aus einem Metall ausgebildet ist.

8. Vorrichtung nach Anspruch 6 oder 7,
dadurch gekennzeichnet, daß
im Inneren der Einheit (52) zum Brennen des Rohmaterials eine im Querschnitt geschlossene Trennwand (62) vorgesehen ist, deren Wandung in einem Abstand von der Wand der Einheit (52) angeordnet ist, der für die Bewegung von Feinkörnern ausreichend ist.

## Claims

1. Process for the production of ceramic products for construction
from a clayey or clay-like material with an alkaline constituent or addition of an alkaline constituent as a binder, for example lime, comprising the following steps:
(1) burning of the clay material at a temperature of about 900°C to 1,100°C,
(2) if appropriate mixing of the burned clay material with the binder,
(3) shaping of the mixture to a product and
(4) damp heat treatment of the product,
which is characterized in that
the burned clay material comprises products of the heat treatment of the clay at the temperature of its amorphization and/or dehydration.

2. Process according to claim 1,
characterized in that
the alkaline constituent is lime in a proportion of 2%.

3. Process according to claim 1 or 2,
characterized in that
the products of the heat treatment of the clay are formed during burning of the clay material.

4. Process according to claim 1 or 2,
characterized in that
the products of the heat treatment of the clay are mixed with the burned clay material.

5. Process according to claims 1 to 3,
characterized in that
the clay is mixed with a solid fuel component, this mixture is granulated and the resulting fine grains are burned in a shaft-like oven by the heat of burning of the carbon, present in these, of the solid fuel components, the fine grains in the shaft region adjacent to the wall being subjected to a heat treatment at temperatures of approx. 900 to 800°C and approx. 600 to 450°C.

6. Device for the production of ceramic products for construction,
comprising a unit for feeding in the raw material, a unit (52) for burning the raw material and a unit for discharge of waste gases and products of the burning operation,
characterized in that
a non-stationary temperature field with a positive temperature gradient directed towards the inside of the raw material is built up in the raw material in the unit (52) for burning the raw material.

7. Device according to claim 6,
characterized in that
the wall of the unit (52) for burning the raw material is constructed of a metal.

8. Device according to claim 6 or 7,
characterized in that
inside the unit (52) for burning the raw material there is provided a partition (62) of closed cross-section, the wall of which is arranged at a distance from the wall of the unit (52) sufficient for the movement of fine grains.

## Revendications

1. Procédé de fabrication de produits céramiques destinés à la construction, à partir d'un matériau argileux ou du genre argileux, avec comme liant un composant alcalin ou bien l'additif d'un composant alcalin, par exemple de la chaux, comprenant les étapes suivantes consistant:
(1) à soumettre à la cuisson le matériau argileux à une température d'environ 900°C jusqu'à 1100°C,
(2) le cas échéant, à mélanger au liant le matériau argileux soumis à la cuisson,
(3) à former ce mélange en un produit, et
(4) à soumettre le produit à un traitement de chauffage à partir de l'état humide, le procédé étant caractérisé en ce que le matériau argileux soumis à la cuisson contient les produits du traitement thermique de l'argile à la température pour laquelle elle passe à l'état amorphe et/ou à l'état déshydraté.

2. Procédé selon la revendication 1, caractérisé en ce que la chaux du composant alcalin est présente à un pourcentage de 2%.

3. Procédé selon la revendication 1 ou 2, caractérisé en ce que les produits du traitement thermique de l'argile sont formés pendant la cuisson du matériau argileux.

4. Procédé selon la revendication 1 ou 2, caractérisé en ce que les produits du traitement thermique de l'argile sont mélangés au matériau argileux soumis à la cuisson.

5. Procédé selon la revendication 1 à 3, caractérisé en ce que l'argile est mélangée à un composant combustible solide, ce mélange est ensuite granulé et les grains fins obtenus sont soumis à la cuisson dans un four profond ou à cuve, par la chaleur de la combustion du matériau carboné du composant combustible solide présent dans ce four, les grains fins étant soumis, dans la zone de la paroi de la cuve, à un traitement thermique à des températures d'environ 900 jusqu'à 800°C, et d'environ 600 jusqu'à 450°C.

6. Dispositif pour la fabrication de produits céramiques destinés à la construction, se composant d'une unité de distribution du matériau brut, d'une unité (52) pour soumettre à la cuisson le matériau brut, et d'une unité pour l'évacuation des gaz brûlés et des produits de combustion, caractérisé en ce que, dans l'unité (52) pour la cuisson du matériau brut, est créé dans ce matériau brut un champ de température instationnaire (non stationnaire) présentant un gradient de températures positif, et qui est dirigé de l'intérieur du matériau brut vers l'extérieur.

7. Dispositif selon la revendication 6, caractérisé en ce que la paroi de l'unité (52) pour la cuisson du matériau brut est réalisée en un métal.

8. Dispositif selon la revendication 6 ou 7, caractérisé en ce que, à l'intérieur de l'unité (52) pour la cuisson du matériau brut, est prévue une paroi de séparation (62) à section transversale fermée, et dont la paroi est placée à distance de la paroi de l'unité (52), cette paroi de séparation étant suffisante pour le déplacement des grains fins.
